# EUROPÄISCHE PATENTSCHRIFT

(11) **EP 0 720 411 B1**
(45) Veröffentlichungstag und Bekanntmachung des Hinweises auf die Patenterteilung: **10.11.2004**
(21) Anmeldenummer: 95119832.4
(22) Anmeldetag: 15.12.1995
(51) Int. Cl.: H04Q 11/04, H04L 12/56

(54) **Verfahren und Anlage zur Überwachung eines ATM-Zellenstroms**
Method and system for policing an ATM-cell stream
Méthode et système pour la surveillance d'un courant de cellules ATM

(30) Priorität: 30.12.1994 DE 4447240
(43) Veröffentlichungstag der Anmeldung: 03.07.1996
(73) Patentinhaber: SIEMENS AKTIENGESELLSCHAFT, 80333 München (DE)
(72) Erfinder: Janczyk, Georg-Raffael, Dr. Ing., D-86159 Augsburg (DE)

(56) Entgegenhaltungen:
- EP-A- 0 576 750
- EP-A- 0 596 159
- WO-A-93/03564

## Beschreibung

Die Erfindung betrifft ein Verfahren und eine Schaltungsanordnung gemäß Oberbegriff der Patentansprüche 1 und 3 bzw. 7 und 8.

Ein derartiges Verfahren und eine derartige Schaltungsanordnung sind bereits aus EP-B1-0 381 275 bekannt. Bei diesen werden verbindungsindividuelle Zähler geführt, deren momentaner Zählerstand einerseits proportional zur Anzahl der für die jeweiligen virtuelle Verbindung eintreffenden Nachrichtenzellen erhöht und andererseits proportional zur Zeit verringert wird. Dabei ist vorgesehen, daß der momentane Zählerstand des einer virtuellen Verbindung zugeordneten Zählers lediglich bei Eintreffen einer Nachrichtenzelle dieser virtuellen Verbindung um einen Wert verringert wird, der eine Funktion des Zeitintervalls zwischen dem Zeitpunkt des Eintreffens dieser Nachrichtenzelle und dem Zeitpunkt des Eintreffens einer vorhergehenden Nachrichtenzelle derselben virtuellen Verbindung ist.

Darüber hinaus sind bereits ein Verfahren und eine Schaltungsanordnung zum Überwachen von Übertragungsbitraten aus der kanadischen Patentanmeldung CA-2087120 bekannt. Bei diesen ist vorgesehen, daß einerseits für jede virtuelle Verbindung entsprechend der geforderten Übertragungsbitrate ein theoretisch maximaler Zeitabstand zwischen zwei aufeinanderfolgenden Nachrichtenzellen derselben virtuellen Verbindung bestimmt und dieser zusammen mit einem imaginären Aussendezeitpunkt der letzten Nachrichtenzellen derselben virtuellen Verbindung festgehalten wird und andererseits eine maximale Verzögerungszeit einer Nachrichtenzelle innerhalb des Systems gespeichert wird. Bei Eintreffen einer Nachrichtenzelle wird ein Zeitwert durch Addition der aktuellen Zeit des Eintreffens der betreffenden Nachrichtenzelle und der genannten maximalen Verzögerungszeit ermittelt. Dieser Zeitwert wird mit einem weiteren Zeitwert verglichen, der durch Addition des festgehaltenen Aussendezeitpunktes der letzten Nachrichtenzelle derselben virtuellen Verbindung und des genannten minimalen Zeitabstandes gebildet wird. Die jeweilige Nachrichtenzelle wird dabei lediglich dann weitergeleitet, wenn der erste Zeitwert größere als der weitere Zeitwert ist.

Schließlich ist aus EP0576750 ein Verfahren bekannt, wobei die Nachrichtenzellenrate für jede virtuelle Verbindung nach einem Leaky-Bucket-Verfahren übernacht und begrenzt wird.

Bei den beiden genannten Verfahren ist es erforderlich, mit jedem Auftreten einer Nachrichtenzelle eine Zeitbestimmung durchzuführen, die je nach der zulässigen Toleranz für die Bitratenüberwachung gegebenenfalls mit einer sehr hohen Genauigkeit durchzuführen ist. Damit ist pro Nachrichtenzelle ein Zeitermittlungsaufwand verbunden, der insbesondere im Hinblick auf die hohen Übertragungsbitraten innerhalb von ATM-Vermittlungsnetzen unerwünscht ist.

Es ist nun Aufgabe der vorliegenden Erfindung, einen Weg zu zeigen, wie ein Verfahren und eine Schaltungsanordnung ausgebildet werden können, um den Steuerungsaufwand, insbesondere den Steuerungaufwand hinsichtlich der Zeiterfassung, bei Eintreffen einer Nachrichtenzelle zu reduzieren.

Diese Aufgabe wird bei einem Verfahren gemäß Oberbegriff des Patentanspruchs 1 bzw. des Patentanspruches 3 durch die in diesem Patentanspruch angegebenen Verfahrensmerkmale gelöst.

Die Erfindung bringt dabei den Vorteil mit sich, daß lediglich im Zuge des Aufbaues der jeweiligen virtuellen Verbindung ein verbindungsindividueller Zählwert auf der Grundlage der zulässigen maximalen Übertragungsbitrate und der für die jeweilige virtuelle Verbindung festgelegten Übertragungsbitrate sowie ein verbindungsindividueller Grenzwert zu bestimmen sind. Bein Eintreffen einer Nachrichtenzelle im Zuge einer bestehenden Verbindung sind dann ohne eine Bestimmung des Eintreffzeitpunktes der jeweiligen Nachrichtenzelle lediglich einfache Additions- bzw. Subtraktionsoperaticnen und Vergleichsoperationen durchzuführen.

Zweckmäßige Ausgestaltungen des Verfahrens gemäß der vorliegenden Erfindung ergeben sich aus den Patentansprüchen 2, 4 und 5.

Die vorstehend aufgezeigte Aufgabe wird bei einer Schaltungsanordnung gemäß Oberbegriff der Patentansprüche 6 und 7 durch die in diesen Patentansprüchen angegebenen schaltungstechnischen Maßnahmen gelöst. Der Vorteil dieser Schaltungsanordnungen besteht dabei in dem geringen schaltungstechnischen Aufwand für eine verbindungsindividuelle Überwachung festgelegter Übertragungsbitraten.

Im folgenden wird die vorliegende Erfindung anhand von Ausführungsbeispielen und von auf diese sich beziehenden Zeichnungen näher erläutert.
- Figur 1: zeigt in einem Blockschaltbild eine Schaltungsanordnung, bei der die vorliegende Erfindung angewandt ist,
- Figur 2: zeigt einen möglichen Aufbau der in Figur 1 lediglich schematisch dargestellten Behandlungseinrichtungen,
- Figur 3: zeigt ein Flußdiagramm für ein Verfahren gemäß einem ersten Ausführungsbeispiel,
- Figur 4: zeigt ein Flußdiagramm für ein Verfahren gemäß einem zweiten Ausführungsbeispiel und
- Figur 5: zeigt ein Flußdiagramm für ein bei den beiden Ausführungsbeispielen durchgeführtes "Refresh"-Verfahren.

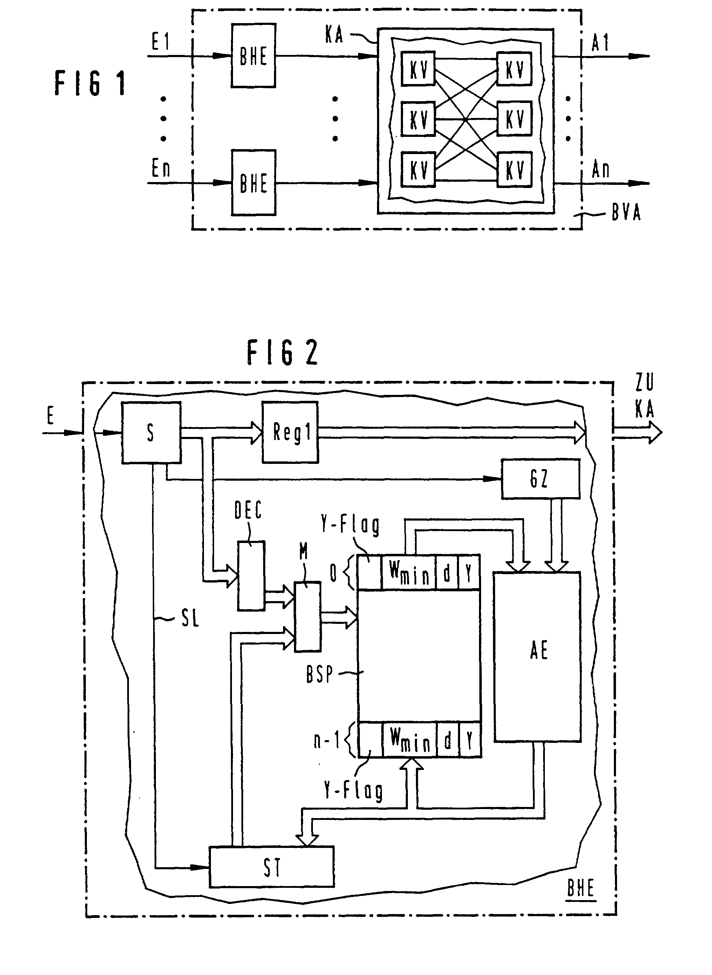

In Figur 1 ist eine nach einem asynchronen Transfermodus arbeitende ATM-Kommunikationseinrichtung ATM-C schematisch dargestellt, an welcher eine Mehrzahl von Zubringerleitungen E1 bis En sowie eine Mehrzahl von Abnehmerleitungen A1 bis An angeschlossen sind. Von diesen sind in Figur 1 lediglich die Zubringerleitungen E1 und En und die Abnehmerleitungen A1 bis An angegeben. Auf den Zubringerleitungen und Abnehmerleitungen erfolgt jeweils eine Übertragung von Nachrichtenzellen im Zuge von virtuellen Verbindungen nach einem asynchronen Übertragungsverfahren ("asynchronous transfer mode"). Bei den Nachrichtenzellen handelt es sich dabei um Zellen fester Länge, welches jeweils über einen Zellenkopf mit einer die jeweilige virtuelle Verbindung bezeichnenden virtuellen Kanalnummer sowie einen Informationsteil verfügen. In dem Informationsteil erfolgt die Übertragung der eigentlichen Nachrichtensignale. Unter Nachrichtensignalen sollen dabei Daten- und Textsignale sowie Sprach- bzw. Bildsignale in digitaler Form verstanden werden.

Wie aus Figur 1 hervorgeht, ist jeder der Zubringerleitungen E1 bis En eine Behandlungseinrichtung BHE zugeordnet. Eine solche Behandlungseinrichtung, auf deren Aufbau im folgenden noch näher eingegangen wird, nimmt die im Zuge von virtuellen Verbindungen über die zugeordnete Zubringerleitung übertragenen Nachrichtenzellen auf und führt vor deren Weiterleitung an eine Koppelanordnung KA der ATM-Kommunikationseinrichtung verbindungsindividuell eine Überprüfung der Einhaltung der für die jeweilige virtuelle Verbindung festgelegten Übertragungsbitrate durch. Für die Koppelanordnung KA ist im übrigen in Figur 1 lediglich als Beispiel ein mehrstufiger Aufbau mit einer Mehrzahl von untereinander verbundenen Koppelvielfachen KV angegeben. Es können jedoch auch beliebige ein- oder mehrstufige Koppelanordnungen benutzt sein. Da der Aufbau und die Wirkungsweise derartiger Koppelanordnungen für die Weiterleitung von Nachrichtenzellen an in Figur 1 mit A1 bis An bezeichnete Abnehmerleitungen bekannt ist, wird im folgenden darauf nicht näher eingegangen.

In Figur 2 ist möglicher Aufbau der zuvor erwähnten, in gleicher Weise aufgebauten Behandlungseinrichtungen BHE dargestellt. Dabei sind lediglich diejenigen Schaltungsteile angegeben, die für das Verständnis der vorliegenden Erfindung erforderlich sind.

Mit der jeweiligen Zubringerleitung, die in Figur 2 mit E bezeichnet ist, ist eine Schnittstelleneinrichtung S verbunden, welche einerseits den Beginn von in serieller Form übertragenen Nachrichtenzellen erkennt und andererseits in Nachrichtenzellen jeweils auftretende Bits zu Bitgruppen mit jeweils einer festgelegten Anzahl von Bits, beispielsweise 8 Bits, zusammenfaßt und die einzelnen Bitgruppen (Oktetts) in paralleler Form über ein Leitungssystem bereitstellt. Dieser Schnittstelleneinrichtung sind ein Register Reg1 als Verzögerungseinrichtung sowie ein Decodierer DEC nachgeschaltet. Dieses Register Reg1 wird von sämtlichen an die bereits erwähnte Koppelanordnung KA weiter zu leitenden Nachrichtenzellen durchlaufen. Die Verzögerungszeit ist dabei so festgelegt, daß durch die nachfolgend beschriebene Schaltungsanordnung vor einer Weiterleitung einer gerade aufgenommenen Nachrichtenzelle an die Koppelanordnung KA eine Überprüfung der Einhaltung der für die jeweilige virtuelle Verbindung festgelegten Übertragungsbitrate durchgeführt werden kann.

Der Zellenkopf einer in das Register Reg1 aufgenommenen Nachrichtenzelle wird zusätzlich dem gerade erwähnten Decodierer DEC zugeführt, der durch Decodieren der in diesem Zellenkopf enthaltenen virtuellen Kanalnummer Adressensignale bereitstellt, die einem Bitratenspeicher BSP über erste Eingänge eines Multiplexers M zugeführt sind. Der Bitratenspeicher BSP weist für jede der auf der zugehörigen Zubringerleitung E möglichen virtuellen Verbindungen einen gesonderten Speicherbereich auf. Die einzelnen Speicherbereiche sind dabei nach Maßgabe der in Nachrichtenzellen enthaltenen, von dem zuvor erwähnten Decodierer DEC decodierten virtuellen Kanalnummern individuell ansteuerbar. Können beispielsweise über die betreffende Zubringerleitung n mit "0" bis "n-1" bezeichnete virtuelle Verbindungen verlaufen, so sind diesen also, wie in Figur 2 angedeutet, mit "0" bis "n-1" bezeichnete Speicherbereiche zugeordnet. Diese sind Teil einer der jeweiligen virtuellen Verbindung individuell zugeordneten Zähleinrichtung. Die einzelnen Speicherbereiche dienen dabei einerseits für die Speicherung eines noch zu erläuternden momentanen Zählerstandes der jeweiligen Zähleinrichtung sowie von ebenfalls noch zu erläuternden verbindungsindividuell im Zuge des Aufbaus der jeweiligen Verbindung festgelegten Parametern. Diese Speicherung erfolgt unter der Steuerung einer in Figur 2 mit ST bezeichneten Steuereinrichtung, die über Leitungssysteme einerseits mit Dateneingängen des Bitratenspeichers BSP und andererseits mit zweiten Eingängen des bereits erwähnten Multiplexers M sowie über eine Steuerleitung SL mit der Schnittstelleneinrichtung S verbunden ist. Die für die virtuellen Verbindungen gespeicherten momentanen Zählerstände und Parameter sind im übrigen in Figur 2 mit Y,d und Wₘᵢₙ bezeichnet.

Sämtlichen einer Zubringerleitung zugeordneten Zähleinrichtungen ist neben einem individuellen Speicherbereich des Bitratenspeichers BSP eine gemeinsame, den einzelnen Zähleinrichtungen im Multiplexbetrieb zur Verfügung stehende Arithmetikeinheit AE zugehörig. Diese Arithmetikeinheit steht über ein Leitungssystem mit Datenausgängen des Bitratenspeichers BSP sowie mit Ausgängen einer globalen Zähleinrichtung GZ in Verbindung. Diese ist mit einem Zähleingang an die bereits erwähnte Schnittstelleneinrichtung S angeschlossen, um die Anzahl der über die Zubringerleitung E im Zuge von bestehenden virtuellen Verbindung auftretenden Nachrichtenzellen global zu erfassen. Ausgangsseitig steht die Arithmetikeinheit AE mit den bereits erwähnten Dateneingängen des Bitratenspeichers BSP sowie der Steuereinrichtung ST in Verbindung.

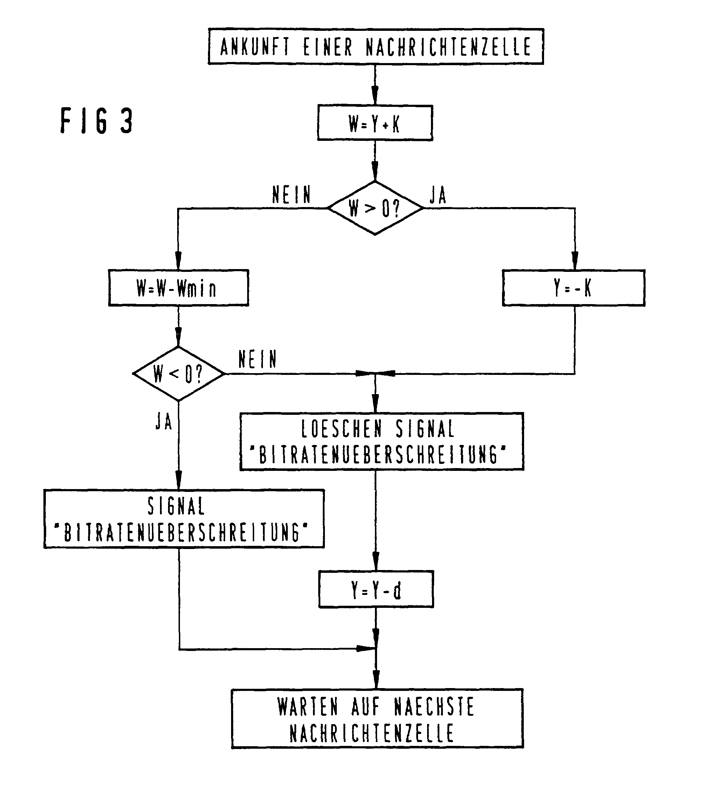

Nachdem zuvor der Aufbau der in Figur 2 dargestellten Behandlungseinrichtung BHE erläutert worden ist, wird nunmehr auf die Wirkungsweise einer solchen Behandlungseinrichtung zunächst unter Bezugnahme auf das Flußdiagramm in Figur 3 näher eingegangen.

Wie bereits erwähnt, werden in die den einzelnen virtuellen Verbindungen zugeordneten Speicherbereiche des Bitratenspeichers BSP individuell festgelegte Parameter eingetragen. Die Festlegung erfolgt im Zuge des Aufbaus der jeweiligen virtuellen Verbindung durch die Steuereinrichtung ST, und zwar nach Maßgabe einer von der die gerade aufzubauende Verbindung wünschenden Teilnehmereinrichtung (rufende Teilnehmereinrichtung) angegebenen Übertragungsbitrate. Bei diesen Parametern handelt es sich um einen Zählwert d und um einen Grenzwert für den Zählerstand, der bei dem vorliegenden Ausführungsbeispiel als minimaler Zählerstand Wₘᵢₙ gewählt ist. Der Zählwert d entspricht dabei dem Verhältnis der maximal für die Zubringerleitung E zulässigen Übertragungsbitrate zu der für die jeweilige virtuelle Verbindung festgelegten Übertragungsbitrate, mit anderen Worten, der Zählwert d ist proportional zu diesem Verhältnis gewählt. Bei einer Mehrzahl von über die Zubringerleitung E verlaufenden virtuellen Verbindungen nimmt also der Zählwert d einen Wert W > 1 an. Nach einer solchen Festsetzung der Parameter werden diese im Zuge eines Schreibzyklus von der Steuereinrichtung ST her durch eine entsprechende Addressierung über den Multiplexer M in den für die jeweilige virtuelle Verbindung in Frage kommenden Speicherbereich des Bitratenspeichers BSP für die gesamte Verbindungsdauer eingetragen. Darüber hinaus wird im Zuge dieses Schreibzyklus ein momentaner Zählerstand Y auf einen festgelegten Anfangswert, beispielsweise auf den Wert Y = 0, gesetzt.

Tritt nun auf der in Figur 2 mit E bezeichneten Zubringerleitung eine Nachrichtenzelle auf, so wird diese von der Schnittstelleneinrichtung S her nach einer oktettweisen Umsetzung dem Register Reg1 zugeführt. Das Auftreten dieser Nachrichtenzelle wird dabei auch der Steuereinrichtung ST durch ein über die oben erwähnte Steuerleitung SL übertragenes Meldesignal angezeigt. Außerdem übernimmt der Decodierer DEC von der Schnittstelleneinrichtung S her den in der gerade auftretenden Nachrichtenzelle enthaltenen Zellenkopf. Schließlich erhält die globale Zähleinrichtung GZ ein Signal als Zählsignal zugeführt, durch welches der momentane Zählerstand, durch den die Anzahl der über die Zubringerleitung E zugeführten Nachrichtenzellen erfaßt ist, um den Wert "1" inkrementiert wird.

Auf das Auftreten des Meldesignals hin steuert die Steuereinrichtung ST einen Lesezyklus in dem Bitratenspeicher BSP nach Maßgabe der von dem Decodierer DEC über den Multiplexer M bereitgestellten Adressensignale. Dadurch stellt dieser Bitratenspeicher an seinen Datenausgängen die in dem gerade adressierten Speicherbereich gespeicherten, zuvor erwähnten Angaben (Parameter und momentaner Zählerstand) bereit. Diese Angaben werden zusammen mit dem momentanen Zählerstand der globalen Zähleinrichtung ZP von der Arithmetikeinheit AE übernommen.

Die Arithmetikeinheit AE führt dann folgende, in Figur 3 als Flußdiagramm dargestellte arithmetische Operationen durch. Zunächst wird ein Summenwert W aus dem verbindungsindividuellen momentanenen Zählerstand Y und dem globalen Zählerstand K der globalen Zähleinrichtung GZ gebildet. Dieser Summenwert W wird anschließend mit dem minimalen Zählerstand Wₘᵢₙ verglichen. Bei dem vorliegenden Ausführungsbeispiel wird der minimale Zählerstand Wₘᵢₙ von dem Summenwert W subtrahiert. Ergibt dieser Vergleich, daß der Summenwert W größer oder gleich dem minimalen Zählerstand Wₘᵢₙ ist (Subtraktion ergibt einen positiven Wert), so wird der momentane Zählerstand Y um den oben erläuterten Zählwert d dekrementiert. Anschließend erfolgt unter der Steuerung der Steuereinrichtung ST ein Schreibzyklus in dem Bitratenspeicher BSP. Dabei wird der dekrementierte momentane Zählerstand in den durch den Decodierer DEC über den Multiplexer M adressierten Speicherbereich unter Überschreiben des bisher darin gespeicherten momentanen Zählerstandes eingetragen.

Ergibt dagegen der zuvor erwähnte Vergleich, daß der Summenwert W kleiner als der minimale Zählerstand Wₘᵢₙ ist (Summenwert nimmt einen Wert kleiner Null an), so wird der momentane Zählerstand Y unverändert beibehalten und der Steuereinrichtung ST ein Meldesignal zugeführt, durch welches ein Überschreiten der für die jeweilige virtuelle Verbindung festgelegten Übertragungsbitrate angezeigt wird. Als Reaktion auf dieses Steuersignal kann beispielsweise die gerade in dem Register Reg1 (Figur 2) gespeicherten Nachrichtenzelle vernichtet werden.

Bei dem vorliegenden Ausführungsbeispiel, bei dem der momentane Zählerstand Y ausgehend von einem Anfangszählerstand Y = 0 durch das Dekrementieren um den Zählwert d stets negative Werte aufweist, ist noch vorgesehen, daß bei einem oben erwähnten Summenwert W = Y + K > 0 der momentane Zählerstand Y auf den Wert Y = - K gesetzt wird. W > 0 tritt immer dann auf, wenn für die jeweilige virtuelle Verbindung über längere Zeit keine Nachrichtenzelle eingetroffen ist. Anschließend wird der momentane Zählerstand Y um den für die jeweilige virtuelle Verbindung festgehaltenen Zählwert d direkt, d.h. ohne einen oben angegebenen Vergleich des Summenwertes mit dem minimalen Zählerstand Wₘᵢₙ , dekrementiert. Der daraus resultierende momentane Zählerstand wird dann in der oben angegebenen Weise in den Bitratenspeicher BSP zurückgeschrieben.

Die gerade erläuterten, in Figur 3 als Flußdiagramm dargestellen Vorgänge wiederholen sich mit jedem Auftreten einer Nachrichtenzelle auf der in Figur 2 mit E bezeichneten Zubringerleitung.

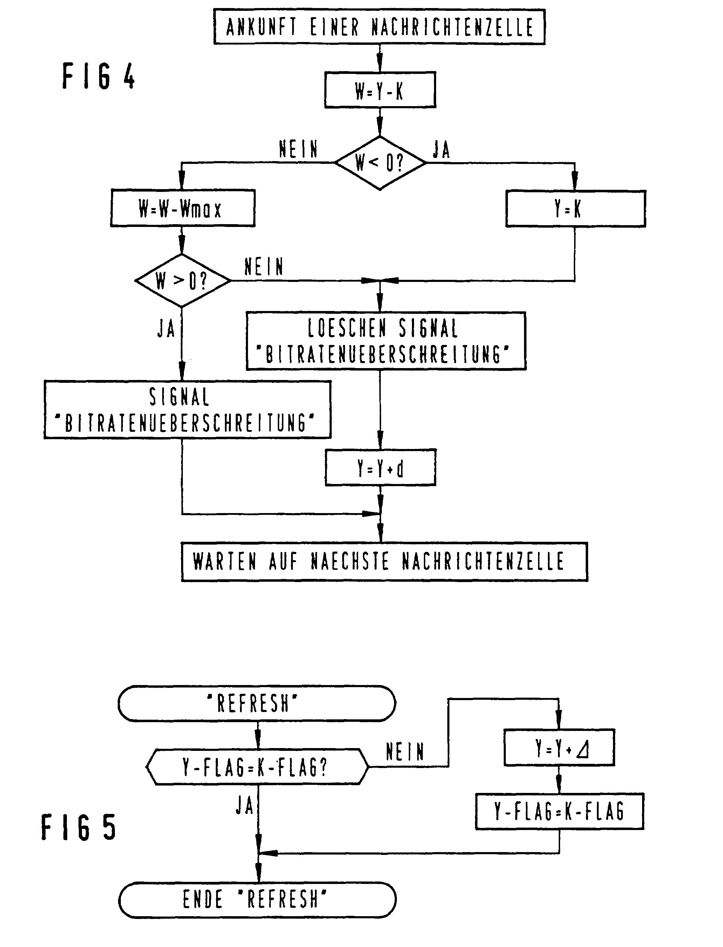

In Figur 4 ist ein zweites Ausführungsbeispiel für das Verfahren gemäß der vorliegenden Erfindung dargestellt. Bei diesem Ausführungsbeipiel wird für die jeweilige Verbindung im Zuge des Verbindungsaufbaues anstelle eines miminalen Zählerstandes Wₘᵢₙ ein maximaler Zählerstand Wₘₐₓ festgelegt. Bei Auftreten einer Nachrichtenzelle werden der Arithmetikeinheit AE, wie beim dem ersten Ausführungsbeispiel, die für die zugehörige virtuelle Verbindung gespeicherten Angaben sowie der momentane Zählerstand K der globalen Zähleinrichtung GZ zugeführt. Anschließend wird ein Differenzwert W aus dem momentanen Zählerstand Y und dem aktuellen globalen Zählerstand K gebildet. Bei dem vorliegenden Ausführungsbeispiel wird der globale Zählerstand K von dem momentanen Zählerstand Y subtrahiert. Der Differenzwert wird anschließend mit dem maximalen Zählerstand Wₘₐₓ verglichen (maximaler Zählerstand wird von dem Differenzwert subtrahiert). Bei einem Differenzwert, der kleiner oder gleich dem maximalen Zählerstand ist, wird der momentane Zählerstand Y um den für die jeweilige virtuelle Verbindung festgelegten Zählwert d inkrementiert und der daraus resultierende aktuelle momentane Zählerstand in der oben angegebenen Weise in den Bitratenspeicher BSP (Figur 2) rückgeschrieben.

Ergibt dagegen der zuvor genannte Vergleich, daß der Differenzwert W größer als der maximale Zählerstand Wₘₐₓ ist, so wird der momentane Zählerstand Y beibehalten und in der oben angegebenen Weise der Steuereinrichtung ST ein Steuersignal für die Anzeige des Überschreitens der für die jeweilige virtuelle Verbindung festgelegten Übertragungsbitrate zugeführt. Bei diesem zweiten Ausführungsbeispiel, bei dem der momentane Zählerstand ausgehend von einem Anfangszählerstand Y = 0 durch das Inkrementieren um den Zählwert d stets positive Werte aufweist, ist noch vorgesehen, daß bei einem oben erwähnten Differenzwert W = Y - K < 0 der momentane Zählerstand Y auf den Wert Y = K gesetzt wird. Dies ist immer dann der Fall, wenn für die jeweilige virtuelle Verbindung über längere Zeit keine Nachrichtenzelle eingetroffen ist. Anschließend wird der momentane Zählstand um den für die jeweilige virtuelle Verbindung festgehaltenen Zählwert d direkt, d.h. ohne einen Vergleich des Differenzwertes mit dem maximalen Zählerstand Wₘₐₓ, inkrementiert und in der oben angegebenen Weise in den Bitratenspeicher BSP (Figur 2) zurückgeschrieben.

Auch bei diesem zweiten Ausführungsbeispiel wiederholen sich die zuvor erläuterten Vorgänge mit jedem Auftreten einer Nachrichtenzelle auf der in Figur 2 dargestellten Zubringerleitung E.

Bei beiden zuvor beschriebenen Ausführungsbeispielen ist die globale Zähleinrichtung GZ als periodisch umlaufender Vorwärtszähler ausgebildet. Dieses periodische Umlaufen der Zählereinrichtung ist bei der Berechnung des momentanen Zählerstandes zu berücksichtigen. Für jede virtuelle Verbindung ist der momentane Zählerstand innerhalb einer Zählperiode der globalen Zähleinrichtung zu aktualisieren. Um den Überlauf der globalen Zähleinrichtung GZ zu erfassen, ist ein zusätzliches Überlaufbit K-Flag vorgesehen, welches zu Beginn jeder Zählperiode invertiert wird. Darüber hinaus ist verbindungsindividuell in dem oben erwähnten Bitratenspeicher BSP (Figur 2) beispielweise zusammen mit den verbindungsindividuellen Angaben ein Bit Y-Flag vorgesehen. In einem den anhand der Figuren 3 und 4 erläuterten Verfahren vorgeschalteten "refresh"-Zyklus, der in Figur 5 als Flußdiagramm dargestellt ist, wird das Überlaufbit K-Flag mit dem verbindungsindividuellen Bit Y-Flag verglichen. Lediglich bei Ungleichheit dieser beiden Bits wird einerseits der Wert des momentanen Zählerstandes Y bei dem Verfahren gemäß Figur 3 um den Wert Δ = 2^{L_{K+1}} inkrementiert, bei dem Verfahren gemäß Figur 4 dagegen dekrementeiert, wobei L_{K} die Anzahl der Zählbits der globalen Zähleinrichtung GZ angibt. Andererseits seits wird das verbindungsindividuelle Bit Y-Flag auf den logischen Pegel des Überlaufbits K-Flag gesetzt. In Figur 5 ist dabei lediglich der "refresh"-Zyklus bei dem Verfahren gemäß Figur 3 dargestellt.

Ein gerade erläuterter "refresh"-Zyklus wird innerhalb einer Zählperiode der globalen Zähleinrichtung GZ für sämtliche bestehenden virtuellen Verbindungen durchgeführt, auch wenn für die jeweilige virtuelle Verbindung innerhalb dieser Zählperiode keine Nachrichtenzelle eingetroffen ist.

Abschließend sei noch darauf hingewiesen, daß die zuvor erläuterte, in Figur 2 ausschnittweise dargestellte Behandlungseinrichtung BHE lediglich eine mögliche Ausführungsform für eine Schaltungsanordnung darstellt, um die anhand der Figur 3 und 4 erläuterten Verfahren zur Bitratenüberwachung zu realisieren. Es sind jedoch auch davon abweichende schaltungstechnische Ausbildungen möglich.

## Patentansprüche

1. Verfahren zum Überwachen von festgelegten Übertragungsbitraten bei der Übertragung von Nachrichtenzellen nach einem asynchronen Transfermodus im Zuge von virtuellen Verbindungen mit Hilfe von den einzelnen virtuellen Verbindungen individuell zugeordneten Zählmitteln, deren momentaner Zählerstand (Y) mit jedem Auftreten einer Nachrichtenzelle der jeweiligen virtuellen Verbindung, welche durch eine in der jeweiligen Nachrichtenzelle enthaltene Verbindungsinformation bezeichnet ist, verändert und bei Erreichen eines festgelegten Grenzwertes (Wₘᵢₙ) durch den momentanen Zählerstand ein Überschreiten der festgelegten Übertragungsbitrate angezeigt wird,
**dadurch gekennzeichnet,**
**daß** im Zuge des Aufbaues der jeweiligen virtuellen Verbindung verbindungsindividuell für die zugeordneten Zählmittel ein dem Verhältnis der maximal zulässigen Übertragungsbitrate zu der für die virtuelle Verbindung festgelegten Übertragungsbitrate entsprechender Zählwert (d)und als Grenzwert ein minimaler Zählerstand (Wₘᵢₙ) bestimmt und für die Dauer des Bestehens der virtuellen Verbindung festgehalten werden sowie der momentane Zählerstand (Y) auf einen festgelegten Anfangszählerstand, z.B. Y₀=0, gesetzt wird,
**daß** die Anzahl der im Zuge von eingerichteten virtuellen Verbindungen auftretenden Nachrichtenzellen durch einen globalen Zählerstand erfaßt wird, welcher mit jedem Auftreten einer Nachrichtenzelle um einen Wert "1" inkrementiert wird,
**daß** auf das Auftreten einer Nachrichtenzelle hin zusätzlich individuell für die jeweilige virtuelle Verbindung ein Summenwert aus dem momentanen Zählerstand (Y) und dem aktuellen globalen Zählerstand gebildet wird,
**daß** der Summenwert mit dem minimalen Zählerstand
(Wₘᵢₙ)verglichen wird,
**daß** bei einem Summenwert, der größer oder gleich dem minimalen Zählerstand (Wₘᵢₙ) ist, der momentane Zählerstand (Y) um den für die jeweilige virtuelle Verbindung festgehaltenen Zählwert (d) dekrementiert und als aktueller momentane Zählerstand (Y) festgehalten wird
und **daß** bei einem Summenwert, der kleiner als der minimale Zählerstand (Wₘᵢₙ) ist, der momentane Zählerstand (Y) beibehalten und ein Überschreiten der für die jeweilige virtuelle Verbindung festgelegten Übertragungsbitrate angezeigt wird.

2. Verfahren nach Anspruch 1,
**dadurch gekennzeichnet,**
**daß** bei einem positiven Summenwert der momentane Zählerstand (Y) auf den negativen Wert des globalen Zählerstandes gesetzt wird
und **daß** der daraus resultierende momentane Zählerstand (Y) um den für die jeweilige virtuelle Verbindung festgehaltenen Zählwert (d) direkt, d.h. ohne einen Vergleich des Summenwertes mit dem minimalen Zählerstand (Wₘᵢₙ), dekrementiert und als aktueller momentane Zählerstand (Y) festgehalten wird

3. Verfahren zum Überwachen von festgelegten Übertragungsbitraten bei der Übertragung von Nachrichtenzellen nach einem asynchronen Transfermodus im Zuge von virtuellen Verbindungen mit Hilfe von den einzelnen virtuellen Verbindungen individuell zugeordneten Zählmitteln, deren momentaner Zählerstand (Y) mit jedem Auftreten einer Nachrichtenzelle der jeweiligen virtuellen Verbindung, welche durch eine in der jeweiligen Nachrichtenzelle enthaltene Verbindungsinformation bezeichnet ist, verändert und bei Erreichen eines festgelegten Grenzwertes, Wₘₐₓ, durch den momentanen Zählerstand ein Überschreiten der festgelegten Übertragungsbitrate angezeigt wird,
**dadurch gekennzeichnet,**
**daß** im Zuge des Aufbaues der jeweiligen virtuellen Verbindung verbindungsindividuell für die zugeordneten Zählmittel ein dem Verhältnis der maximal zulässigen Übertragungsbitrate zu der für die virtuelle Verbindung festgelegten Übertragungsbitrate entsprechender Zählwert (d)und als Grenzwert ein maximaler Zählerstand, Wₘₐₓ, bestimmt und für die Dauer des Bestehens der virtuellen Verbindung festgehalten werden sowie der momentane Zählerstand (Y) auf einen festgelegten Anfangszählerstand, z.B. Y₀=0, gesetzt wird,
**daß** die Anzahl der im Zuge von eingerichteten virtuellen Verbindungen auftretenden Nachrichtenzellen durch einen globalen Zählerstand erfaßt wird, welcher mit jedem Auftreten einer Nachrichtenzelle um einen Wert "1" inkrementiert wird,
**daß** auf das Auftreten einer Nachrichtenzelle hin zusätzlich individuell für die jeweilige virtuelle Verbindung ein Differenzwert aus dem momentanen Zählerstand (Y) und dem aktuellen globalen Zählerstand gebildet wird,
**daß** der Differenzwert mit dem festgelegten maximalen Zählerstand, W_{max,} verglichen wird,
**daß** bei einem Differenzwert, der kleiner oder gleich dem maximalen Zählerstan, Wₘₐₓ, ist, der momentane Zählerstand (Y) um den für die jeweilige virtuelle Verbindung festgehaltenen Zählwert (d) inkrementiert und als aktueller momentane Zählerstand (Y) festgehalten wird
und **daß** bei einem Differenzwert, der größer als der maximale Zählerstand, Wₘₐₓ, ist, der momentane Zählerstand (Y) beibehalten und ein Überschreiten der für die jeweilige virtuelle Verbindung festgelegten Übertragungsbitrate angezeigt wird.

4. Verfahren nach Anspruch 3,
**dadurch gekennzeichnet,**
**daß** für die Bildung des Differenzwertes der maximale Zählerstand, Wₘₐₓ, von dem momentanen Zählerstand (Y) subtrahiert wird,
**daß** bei einem daraus resultierenden negativen Differenzwert der momentane Zählerstand (Y) auf den Wert des globalen Zählerstandes gesetzt wird
und **daß** der daraus resultierende momentane Zählerstand (Y) um den für die jeweilige virtuelle Verbindung festgehaltenen Zählwert (d) direkt, d.h. ohne einen Vergleich des Differenzwertes mit dem maximalen Zählerstand, Wₘₐₓ, inkrementiert und als aktueller momentane Zählerstand (Y) festgehalten wird

5. Verfahren nach Anspruche 1 oder 2,
**dadurch gekennzeichnet,**
**daß** der globale Zählerstand in aufeinander folgenden Zählperioden jeweils durch eine Mehrzahl L_{K} von Zählbits erfaßt wird,
**daß** zusätzlich zu den Zählbits ein Überlaufbit, K-Flag, dessen logischer Pegel mit jedem Beginn einer Zählperiode invertiert wird, sowie zu jeder der virtuellen Verbindungen ein Vergleichsbit geführt werden
und **daß** der momentane Zählerstand (Y) der jeweiligen virtuellen Verbindung pro Zählperiode zumindest einmal dadurch aktualisiert wird, daß bei Ungleichheit des logischen Pegels des der jeweiligen virtuellen Verbindung zugeordneten Vergleichsbits und des Überlaufbits der momentane Zählerstand um den Wert 2^{L +1} inkrementiert und der logische Pegel des Vergleichsbits (Y-Flag) auf den logischen Pegel des Überlaufbits, K-Flag, gesetzt wird.

6. Verfahren nach Anspruche 3 oder 4,
**dadurch gekennzeichnet,**
**daß** der globale Zählerstand in aufeinander folgenden Zählperioden jeweils durch eine Mehrzahl L_{K} von Zählbits erfaßt wird,
**daß** zusätzlich zu den Zählbits ein Überlaufbit, K-Flag, dessen logischer Pegel mit jedem Beginn einer Zählperiode invertiert wird, sowie zu jeder der virtuellen Verbindungen ein Vergleichsbit geführt werden
und **daß** der momentane Zählerstand (Y) der jeweiligen virtuellen Verbindung pro Zählperiode zumindest einmal dadurch aktualisiert wird, daß bei Ungleichheit des logischen Pegels des der jeweiligen virtuellen Verbindung zugeordneten Vergleichsbits und des Überlaufbits der momentane Zählerstand um den Wert 2^{L +1} dekrementiert und der logische Pegel des Vergleichsbits (Y-Flag) auf den logischen Pegel des Überlaufbits, K-Flag, gesetzt wird.

7. Schaltungsanordnung zum Überwachen von festgelegten Übertragungsbitraten bei der Übertragung von Nachrichtenzellen nach einem asynchronen Transfermodus im Zuge von virtuellen Verbindungen mit Hilfe von den einzelnen virtuellen Verbindungen individuell zugeordneten Zählmitteln, deren momentaner Zählerstand (Y) mit jedem Auftreten einer Nachrichtenzelle der jeweiligen virtuellen Verbindung, welche durch eine in der jeweiligen Nachrichtenzelle enthaltene Verbindungsinformation bezeichnet ist, verändert und bei Erreichen eines festgelegten Grenzwertes (Wₘᵢₙ) durch den momentanen Zählerstand ein Überschreiten der festgelegten Übertragungsbitrate angezeigt wird,
**dadurch gekennzeichnet,**
**daß** Steuermittel (ST, BSP) vorgesehen und derart ausgebildet sind, daß im Zuge des Aufbaues der jeweiligen virtuellen Verbindung verbindungsindividuell für die zugeordneten Zählmittel ein dem Verhältnis der maximal zulässigen Übertragungsbitrate zu der für virtuelle Verbindung festgelegten Übertragungsbitrate entsprechender Zählwert (d)und als Grenzwert ein minimaler Zählerstand (Wₘᵢₙ) bestimmt und für die Dauer des Bestehens der virtuellen Verbindung festgehalten werden sowie der momentane Zählerstand (Y) auf einen festgelegten Anfangszählerstand, z.B. Y₀=0, gesetzt wird,
**daß** globale Zählmittel (GZ) vorgesehen und derart ausgebildet sind, daß die Anzahl der im Zuge von eingerichteten virtuellen Verbindungen auftretenden Nachrichtenzellen durch einen globalen Zählerstand erfaßt wird, welcher mit jedem Auftreten einer Nachrichtenzelle um einen Wert "1" inkrementiert wird,
und **daß** Mittel zu Durchführung arithmetischer Operationen (AE) vorgesehen und derart ausgebildet sind, daß auf das Auftreten einer Nachrichtenzelle hin individuell für die jeweilige virtuelle Verbindung ein Summenwert aus dem momentanen Zählerstand (Y) und dem aktuellen globalen Zählerstand gebildet wird,
**daß** der Summenwert mit dem minimalen Zählerstand
(Wₘᵢₙ)verglichen wird,
**daß** bei einem Summenwert, der größer oder gleich dem minimalen Zählerstand (Wₘᵢₙ) ist, der momentane Zählerstand (Y) um den für die jeweilige virtuelle Verbindung festgehaltenen Zählwert (d) dekrementiert und als aktueller momentane Zählerstand (Y) festgehalten wird
und **daß** bei einem Summenwert, der kleiner als der minimale Zählerstand (Wₘᵢₙ) ist, der momentane Zählerstand (Y) beibehalten und ein Überschreiten der für die jeweilige virtuelle Verbindung festgelegten Übertragungsbitrate angezeigt wird.

8. Schaltungsanordnung zum Überwachen von festgelegten Übertragungsbitraten bei der Übertragung von Nachrichtenzellen nach einem asynchronen Transfermodus im Zuge von virtuellen Verbindungen mit Hilfe von den einzelnen virtuellen Verbindungen individuell zugeordneten Zählmitteln, deren momentaner Zählerstand (Y) mit jedem Auftreten einer Nachrichtenzelle der jeweiligen virtuellen Verbindung, welche durch eine in der jeweiligen Nachrichtenzelle enthaltene Verbindungsinformation bezeichnet ist, verändert und bei Erreichen eines festgelegten Grenzwertes, Wₘₐₓ, durch den momentanen Zählerstand ein Überschreiten der festgelegten Übertragungsbitrate angezeigt wird,
**dadurch gekennzeichnet,**
**daß** Steuermittel (ST, BSP) vorgesehen und derart ausgebildet sind, daß im Zuge des Aufbaues der jeweiligen virtuellen Verbindung verbindungsindividuell für die zugeordneten Zählmittel ein dem Verhältnis der maximal zulässigen Übertragungsbitrate zu der für virtuelle Verbindung festgelegten Übertragungsbitrate entsprechender Zählwert (d)und als Grenzwert ein maximaler Zählerstand, Wₘₐₓ, bestimmt und für die Dauer des Bestehens der virtuellen Verbindung festgehalten werden sowie der momentane Zählerstand (Y) auf einen festgelegten Anfangszählerstand, z.B. Y₀=0, gesetzt wird,
**daß** globale Zählmittel (GZ) vorgesehen und derart ausgebilet sind, daß die Anzahl der im Zuge von eingerichteten virtuellen Verbindungen auftretenden Nachrichtenzellen durch einen globalen Zählerstand erfaßt wird, welcher mit jedem Auftreten einer Nachrichtenzelle um einen Wert "1" inkrementiert wird,
und **daß** Mittel zur Durchführung arithmetischer Operationen vorgesehen und derart ausgebildet sind, daß auf das Auftreten einer Nachrichtenzelle hin individuell für die jeweilige virtuelle Verbindung ein Differenzwert aus dem momentanen Zählerstand (Y) und dem aktuellen globalen Zählerstand gebildet wird,
**daß** der Differenzwert mit dem festgelegten maximalen Zählerstand, Wₘₐₓ, verglichen wird,
**daß** bei einem Differenzwert, der kleiner oder gleich dem maximalen Zählerstand, Wₘₐₓ, ist, der momentane Zählerstand (Y) um den für die jeweilige virtuelle Verbindung festgehaltenen Zählwert (d) inkrementiert und als aktueller momentane Zählerstand (Y) festgehalten wird
und **daß** bei einem Differenzwert, der größer als der maximale Zählerstand, Wₘₐₓ, ist, der momentane Zählerstand (Y) beibehalten und ein Überschreiten der für die jeweilige virtuelle Verbindung festgelegten Übertragungsbitrate angezeigt wird.

## Claims

1. Method for monitoring predefined transmission bit rates during the transmission of message cells according to an asynchronous transfer mode in the course of virtual connections with the aid of counting means individually assigned to the individual virtual connections, the current counter reading (Y) of said counting means being modified with each occurrence of a message cell of the respective virtual connection which is identified by means of connection information contained in the respective message cell and a signal indicating that the predefined transmission bit rate has been exceeded being displayed when a predefined limit value (Wₘᵢₙ) is reached by the current counter reading,
**characterised in that**
in the course of the setup of the respective virtual connection a count value (d) corresponding to the ratio of the maximum permitted transmission bit rate to the transmission bit rate predefined for the virtual connection is determined for the assigned counting means on a call-associated basis and a minimum counter reading (Wₘᵢₙ) is defined as a limit value, said values being retained for the duration of the existence of the virtual connection, and the current counter reading (Y) is set to a specified initial counter reading, e.g. Y₀=0,
that the number of message cells occurring in the course of established virtual connections is recorded by means of a global counter reading which is incremented by a value "1" upon each occurrence of a message cell,
that in addition, in response to the occurrence of a message cell, a sum value is formed individually for the respective virtual connection from the current counter reading (Y) and the current global counter reading,
that the sum value is compared with the minimum counter reading (Wₘᵢₙ),
that, given a sum value which is greater than or equal to the minimum counter reading (Wₘᵢₙ) , the current counter reading (Y) is decremented by the count value (d) recorded for the respective virtual connection and is retained as the current counter reading (Y),
and that, given a sum value which is less than the minimum counter reading (Wₘᵢₙ), the current counter reading (Y) is retained and a signal is displayed indicating that the transmission bit rate predefined for the respective virtual connection has been exceeded.

2. Method according to claim 1,
**characterised in that**,
given a positive sum value, the current counter reading (Y) is set to the negative value of the global counter reading
and that the current counter reading (Y) resulting therefrom is decremented directly by the count value (d) recorded for the respective virtual connection, i.e. without a comparison of the sum value with the minimum counter reading (Wₘᵢₙ) and is retained as the current counter reading (Y).

3. Method for monitoring predefined transmission bit rates during the transmission of message cells according to an asynchronous transfer mode in the course of virtual connections with the aid of counting means individually assigned to the individual virtual connections, the current counter reading (Y) of said counting means being modified with each occurrence of a message cell of the respective virtual connection which is identified by means of connection information contained in the respective message cell and a signal indicating that the predefined transmission bit rate has been exceeded being displayed when a predefined limit value, Wₘₐₓ, is reached by the current counter reading,
**characterised in that**
in the course of the setup of the respective virtual connection a count value (d) corresponding to the ratio of the maximum permitted transmission bit rate to the transmission bit rate predefined for the virtual connection is determined for the assigned counting means on a call-associated basis and a maximum counter reading, Wₘₐₓ, is defined as a limit value, said values being retained for the duration of the existence of the virtual connection, and the current counter reading (Y) is set to a specified initial counter reading, e.g. Y₀=0,
that the number of message cells occurring in the course of established virtual connections is recorded by means of a global counter reading which is incremented by a value "1" with each occurrence of a message cell,
that in addition, in response to the occurrence of a message cell, a difference value is formed individually for the respective virtual connection from the current counter reading (Y) and the current global counter reading,
that the difference value is compared with the predefined maximum counter reading, Wₘₐₓ,
that, given a difference value which is less than or equal to the maximum counter reading, Wₘₐₓ, the current counter reading (Y) is incremented by the count value (d) recorded for the respective virtual connection and is retained as the current counter reading (Y)
and that, given a difference value which is greater than the maximum counter reading, Wₘₐₓ, the current counter reading (Y) is retained and a signal is displayed indicating that the transmission bit rate predefined for the respective virtual connection has been exceeded.

4. Method according to claim 3,
**characterised in that**
in order to form the difference value, the maximum counter reading, Wₘₐₓ, is subtracted from the current counter reading (Y),
that, given a negative difference value resulting therefrom, the current counter reading (Y) is set to the value of the global counter reading,
and that the current counter reading (Y) resulting therefrom is incremented directly by the count value (d) recorded for the respective virtual connection, i.e. without a comparison of the difference value with the maximum counter reading, Wₘₐₓ, and retained as the current counter reading (Y).

5. Method according to claims 1 or 2,
**characterised in that**
the global counter reading is recorded in successive count cycles by means of a plurality L_{K} of count bits in each case,
that, in addition to the count bits, an overflow bit, K-Flag, the logical level of which is inverted at each start of a count cycle, and a comparison bit for each of the virtual connections are maintained,
and that the current counter reading (Y) of the respective virtual connection is updated at least once per count cycle **in that**, in the event of the inequality of the logical level of the comparison bit assigned to the respective virtual connection and of the overflow bit, the current counter reading is incremented by the value 2^{L + 1} and the logical level of the comparison bit (Y-Flag) is set to the logical level of the overflow bit, K-Flag.

6. Method according to claims 3 or 4,
**characterised in that**
the global counter reading is recorded in successive count cycles by means of a plurality L_{K} of count bits in each case,
that, in addition to the count bits, an overflow bit, K-Flag, the logical level of which is inverted at each start of a count cycle, and a comparison bit for each of the virtual connections are maintained,
and that the current counter reading (Y) of the respective virtual connection is updated at least once per count cycle **in that**, in the event of the inequality of the logical level of the comparison bit assigned to the respective virtual connection and of the overflow bit, the current counter reading is decremented by the value 2^{L + 1} and the logical level of the comparison bit (Y-Flag) is set to the logical level of the overflow bit, K-Flag.

7. Circuit arrangement for monitoring predefined transmission bit rates during the transmission of message cells according to an asynchronous transfer mode in the course of virtual connections with the aid of counting means individually assigned to the individual virtual connections, the current counter reading (Y) of said counting means being modified with each occurrence of a message cell of the respective virtual connection which is identified by means of connection information contained in the respective message cell and a signal indicating that the predefined transmission bit rate has been exceeded being displayed when a predefined limit value (Wₘᵢₙ) is reached by the current counter reading,
**characterised in that**
control means (ST, BSP) are provided and are embodied such that, in the course of the setup of the respective virtual connection, a count value (d) corresponding to the ratio of the maximum permitted transmission bit rate to the transmission bit rate predefined for the virtual connection is determined for the assigned counting means on a call-associated basis and a minimum counter reading (Wₘᵢₙ) is defined as a limit value, said values being retained for the duration of the existence of the virtual connection, and the current counter reading (Y) is set to a specified initial counter reading, e.g. Y₀=0,
that global counting means (GZ) are provided and are embodied such that the number of message cells occurring in the course of established virtual connections is recorded by means of a global counter reading which is incremented by a value "1" with each occurrence of a message cell, and
that means for performing arithmetic operations (AE) are provided and are embodied such that, in response to the occurrence of a message cell, a sum value is formed individually for the respective virtual connection from the current counter reading (Y) and the current global counter reading,
that the sum value is compared with the minimum counter reading (Wₘᵢₙ),
that, given a sum value which is greater than or equal to the minimum counter reading (Wₘᵢₙ), the current counter reading (Y) is decremented by the count value (d) recorded for the respective virtual connection and is retained as the current counter reading (Y), and
that, given a sum value which is less than the minimum counter reading (Wₘᵢₙ), the current counter reading (Y) is retained and a signal is displayed indicating that the predefined transmission bit rate for the respective virtual connection has been exceeded.

8. Circuit arrangement for monitoring predefined transmission bit rates during the transmission of message cells according to an asynchronous transfer mode in the course of virtual connections with the aid of counting means individually assigned to the individual virtual connections, the current counter reading (Y) of said counting means being modified with each occurrence of a message cell of the respective virtual connection which is identified by means of connection information contained in the respective message cell and a signal indicating that the predefined transmission bit rate has been exceeded being displayed when a predefined limit value, Wₘₐₓ, is reached by the current counter reading,
**characterised in that**
control means (ST, BSP) are provided and are embodied such that, in the course of the setup of the respective virtual connection, a count value (d) corresponding to the ratio of the maximum permitted transmission bit rate to the transmission bit rate predefined for the virtual connection is determined for the assigned counting means on a call-associated basis and a maximum counter reading, Wₘₐₓ, is defined as a limit value, said values being retained for the duration of the existence of the virtual connection, and the current counter reading (Y) is set to a specified initial counter reading, e.g. Y₀=0,
that global counting means (GZ) are provided and are embodied such that the number of message cells occurring in the course of established virtual connections is recorded by means of a global counter reading which is incremented by a value "1" with each occurrence of a message cell,
and that means for performing arithmetic operations are provided and are embodied such that, in response to the occurrence of a message cell, a difference value is formed individually for the respective virtual connection from the current counter reading (Y) and the current global counter reading,
that the difference value is compared with the specified maximum counter reading, Wₘₐₓ,
that, given a difference value which is less than or equal to the maximum counter reading, Wₘₐₓ, the current counter reading (Y) is incremented by the count value (d) recorded for the respective virtual connection and is retained as the current counter reading (Y),
and that, given a difference value which is greater than the maximum counter reading, Wₘₐₓ, the current counter reading (Y) is retained and a signal is displayed indicating that the transmission bit rate predefined for the respective virtual connection has been exceeded.

## Revendications

1. Procédé de surveillance de débits de bits de transmission déterminés, lors de la transmission de cellules de message selon un mode de transfert asynchrone dans le cadre de liaisons virtuelles, à l'aide de moyens de comptage affectés individuellement aux différentes liaisons virtuelles et dont l'état instantané (Y) du compteur est modifié à chaque apparition d'une cellule de message de la liaison virtuelle respective, laquelle est désignée par une information de liaison contenue dans la cellule de message respective, et un dépassement du débit de bits de transmission déterminé est signalé par l'état instantané du compteur à l'obtention d'une valeur limite déterminée (Wₘᵢₙ),
**caractérisée en ce**
**que** dans le cadre de l'établissement de la liaison virtuelle respective une valeur de comptage (d) correspondant au rapport entre le débit de bits de transmission maximal autorisé et le débit de bits de transmission déterminé pour la liaison individuelle et, en tant que valeur limite, un état minimal (Wₘᵢₙ) du compteur sont déterminés individuellement pour chaque liaison pour les moyens de comptage affectés, et retenus pour la durée de l'existence de la liaison virtuelle, et l'état instantané (Y) du compteur est mis à un état initial déterminé du compteur, par exemple Y₀ = 0;
**que** le nombre des cellules de message apparaissant dans le cadre de liaisons virtuelles établies est détecté par un état global du compteur qui est incrémenté d'une valeur «1 » à chaque apparition d'une cellule de message;
**qu'**en réaction à l'apparition d'une cellule de message une valeur de somme est additionnellement constituée, individuellement pour la liaison virtuelle respective, au départ de l'état instantané (Y) du compteur et de l'état actuel global du compteur;
**que** la valeur de somme est comparée avec l'état minimal (Wₘᵢₙ) du compteur;
**que** dans le cas d'une valeur de somme supérieure ou égale à l'état minimal (Wₘᵢₙ) du compteur, l'état instantané (Y) du compteur est décrémenté de la valeur de comptage (d) retenue pour la liaison virtuelle respective et est retenu en tant qu'état instantané actuel (Y) du compteur
et **que** dans le cas d'une valeur de somme inférieure à l'état minimal (Wₘᵢₙ) du compteur, l'état instantané (Y) du compteur est maintenu et un dépassement du débit de bits de transmission déterminé pour la liaison virtuelle respective est signalé.

2. Procédé selon la revendication 1,
**caractérisée en ce que**,
dans le cas d'une valeur de somme positive, l'état instantané (Y) du compteur est mis à la valeur négative de l'état global du compteur
et **en ce que** l'état instantané (Y) du compteur qui en résulte est décrémenté directement de la valeur de comptage (d) retenue pour la liaison virtuelle respective, c'est-à-dire sans comparaison de la valeur de somme avec l'état minimal (Wₘᵢₙ) du compteur, et est maintenu en tant qu'état instantané actuel (Y) du compteur.

3. Procédé de surveillance de débits de bits de transmission déterminés, lors de la transmission de cellules de message selon un mode de transfert asynchrone dans le cadre de liaisons virtuelles, à l'aide de moyens de comptage affectés individuellement aux différentes liaisons virtuelles et dont l'état instantané (Y) du compteur est modifié à chaque apparition d'une cellule de message de la liaison virtuelle respective, laquelle est désignée par une information de liaison contenue dans la cellule de message respective, et un dépassement du débit de bits de transmission déterminé est signalé par l'état instantané du compteur à l'obtention d'une valeur limite déterminée Wₘₐₓ,
**caractérisée en ce**
**que** dans le cadre de l'établissement de la liaison virtuelle respective une valeur de comptage (d) correspondant au rapport entre le débit de bits de transmission maximal autorisé et le débit de bits de transmission déterminé pour la liaison individuelle et, en tant que valeur limite, un état maximal Wₘₐₓ du compteur sont déterminés individuellement pour chaque liaison pour les moyens de comptage affectés, et retenus pour la durée de l'existence de la liaison virtuelle, et l'état instantané (Y) du compteur est mis à un état initial déterminé du compteur, par exemple Y₀ = 0;
**que** le nombre des cellules de message apparaissant dans le cadre de liaisons virtuelles établies est détecté par un état global du compteur qui est incrémenté d'une valeur «1» à chaque apparition d'une cellule de message;
**qu'**en réaction à l'apparition d'une cellule de message une valeur de différence est additionnellement constituée, individuellement pour la liaison virtuelle respective, au départ de l'état instantané (Y) du compteur et de l'état actuel global du compteur;
**que** la valeur de différence est comparée avec l'état maximal déterminé Wₘₐₓ du compteur;
**que** dans le cas d'une valeur de différence inférieure ou égale à l'état maximal Wₘₐₓ du compteur, l'état instantané (Y) du compteur est incrémenté de la valeur de comptage (d) maintenue pour la liaison virtuelle respective et est retenu en tant qu'état instantané actuel (Y) du compteur
et **que** dans le cas d'une valeur de différence supérieure à l'état maximal Wₘₐₓ du compteur, l'état instantané (Y) du compteur est maintenu et un dépassement du débit de bits de transmission déterminé pour la liaison virtuelle respective est signalé.

4. Procédé selon la revendication 3,
**caractérisée en ce**
**que** pour la formation de la valeur de différence, l'état maximal Wₘₐₓ du compteur est soustrait de l'état instantané (Y) du compteur;
**que** dans le cas où il en résulte une valeur de différence négative, l'état instantané (Y) du compteur est mis à la valeur de l'état global du compteur
et **que** l'état instantané (Y) du compteur qui en résulte est incrémenté directement de la valeur de comptage (d) retenue pour la liaison virtuelle respective, c'est-à-dire sans comparaison de la valeur de différence avec l'état maximal Wₘₐₓ du compteur, et est maintenu en tant qu'état instantané actuel (Y) du compteur.

5. Procédé selon la revendication 1 ou 2,
**caractérisée en ce**
**que** l'état global du compteur est détecté respectivement par une pluralité L_{K} de bits de comptage dans des périodes de comptage successives;
**qu'**on a, en plus des bits de comptage, un bit de dépassement de capacité K-Flag, dont le niveau logique est inversé à chaque début d'une période de comptage, et un bit de comparaison pour chacune des liaisons virtuelles
et **que** l'état instantané (Y) du compteur pour la liaison virtuelle respective est actualisé au moins une fois par période de comptage par le fait qu'en cas d'inégalité du niveau logique du bit de comparaison affecté à la liaison virtuelle respective et du bit de dépassement de capacité l'état instantané du compteur est incrémenté de la valeur 2^{L+1} et le niveau logique du bit de comparaison (Y-Flag) est mis au niveau logique du bit de dépassement de capacité K-Flag.

6. Procédé selon la revendication 3 ou 4,
**caractérisée en ce**
**que** l'état global du compteur est détecté respectivement par une pluralité L_{K} de bits de comptage dans des périodes de comptage successives;
**qu'**on a, en plus des bits de comptage, un bit de dépassement de capacité K-Flag, dont le niveau logique est inversé à chaque début d'une période de comptage, et un bit de comparaison pour chacune des liaisons virtuelles
et **que** l'état instantané (Y) du compteur pour la liaison virtuelle respective est actualisé au moins une fois par période de comptage par le fait qu'en cas d'inégalité du niveau logique du bit de comparaison affecté à la liaison virtuelle respective et du bit de dépassement de capacité l'état instantané du compteur est décrémenté de la valeur 2^{L+1} et le niveau logique du bit de comparaison (Y-Flag) est mis au niveau logique du bit de dépassement de capacité K-Flag.

7. Circuit de surveillance de débits de bits de transmission déterminés, lors de la transmission de cellules de message selon un mode de transfert asynchrone dans le cadre de liaisons virtuelles, à l'aide de moyens de comptage affectés individuellement aux différentes liaisons virtuelles et dont l'état instantané (Y) du compteur est modifié à chaque apparition d'une cellule de message de la liaison virtuelle respective, laquelle est désignée par une information de liaison contenue dans la cellule de message respective, et un dépassement du débit de bits de transmission déterminé est signalé par l'état instantané du compteur à l'obtention d'une valeur limite déterminée (Wₘᵢₙ),
**caractérisé en ce**
**que** des moyens de commande (ST, BSP) sont prévus et réalisés de manière telle que, dans le cadre de l'établissement de la liaison virtuelle respective, une valeur de comptage (d) correspondant au rapport entre le débit de bits de transmission maximal autorisé et le débit de bits de transmission déterminé pour la liaison individuelle et, en tant que valeur limite, un état minimal (Wₘᵢₙ) du compteur sont déterminés individuellement pour chaque liaison pour les moyens de comptage affectés, et retenus pour la durée de l'existence de la liaison virtuelle, et l'état instantané (Y) du compteur est mis à un état initial déterminé du compteur, par exemple Y₀ = 0;
**que** des moyens de comptage globaux (GZ) sont prévus et réalisés de manière telle que le nombre des cellules de message apparaissant dans le cadre de liaisons virtuelles établies est détecté par un état global du compteur qui est incrémenté d'une valeur «1» à chaque apparition d'une cellule de message
et **que** des moyens permettant d'effectuer des opérations arithmétiques (AE) sont prévus et réalisés de manière telle que, en réaction à l'apparition d'une cellule de message, une valeur de somme est constituée, individuellement pour la liaison virtuelle respective, au départ de l'état instantané (Y) du compteur et de l'état actuel global du compteur;
**que** la valeur de somme est comparée avec l'état minimal (Wₘᵢₙ) du compteur;
**que** dans le cas d'une valeur de somme supérieure ou égale à l'état minimal (Wₘᵢₙ) du compteur, l'état instantané (Y) du compteur est décrémenté de la valeur de comptage (d) retenue pour la liaison virtuelle respective et est retenu en tant qu'état instantané actuel (Y) du compteur
et **que** dans le cas d'une valeur de somme inférieure à l'état minimal (Wₘᵢₙ) du compteur, l'état instantané (Y) du compteur est maintenu et un dépassement du débit de bits de transmission déterminé pour la liaison virtuelle respective est signalé.

8. Circuit de surveillance de débits de bits de transmission déterminés, lors de la transmission de cellules de message selon un mode de transfert asynchrone dans le cadre de liaisons virtuelles, à l'aide de moyens de comptage affectés individuellement aux différentes liaisons virtuelles et dont l'état instantané (Y) du compteur est modifié à chaque apparition d'une cellule de message de la liaison virtuelle respective, laquelle est désignée par une information de liaison contenue dans la cellule de message respective, et un dépassement du débit de bits de transmission déterminé est signalé par l'état instantané du compteur à l'obtention d'une valeur limite déterminée Wₘₐₓ,
**caractérisé en ce**
**que** des moyens de commande (ST, BSP) sont prévus et réalisés de manière telle que, dans le cadre de l'établissement de la liaison virtuelle respective, une valeur de comptage (d) correspondant au rapport entre le débit de bits de transmission maximal autorisé et le débit de bits de transmission déterminé pour la liaison individuelle et, en tant que valeur limite, un état maximal Wₘₐₓ du compteur sont déterminés individuellement pour chaque liaison pour les moyens de comptage affectés, et retenus pour la durée de l'existence de la liaison virtuelle, et l'état instantané (Y) du compteur est mis à un état initial déterminé du compteur, par exemple Y₀ = 0;
**que** des moyens de comptage globaux (GZ) sont prévus et réalisés de manière telle que le nombre des cellules de message apparaissant dans le cadre de liaisons virtuelles établies est détecté par un état global du compteur qui est incrémenté d'une valeur «1» à chaque apparition d'une cellule de message
et **que** des moyens permettant d'effectuer des opérations arithmétiques sont prévus et réalisés de manière telle que, en réaction à l'apparition d'une cellule de message, une valeur de différence est constituée, individuellement pour la liaison virtuelle respective, au départ de l'état instantané (Y) du compteur et de l'état actuel global du compteur;
**que** la valeur de différence est comparée avec l'état maximal déterminé Wₘₐₓ du compteur;
**que** dans le cas d'une valeur de différence inférieure ou égale à l'état maximal Wₘₐₓ du compteur, l'état instantané (Y) du compteur est incrémenté de la valeur de comptage (d) maintenue pour la liaison virtuelle respective et est retenu en tant qu'état instantané actuel (Y) du compteur
et **que** dans le cas d'une valeur de différence supérieure à l'état maximal Wₘₐₓ du compteur, l'état instantané (Y) du compteur est maintenu et un dépassement du débit de bits de transmission déterminé pour la liaison virtuelle respective est signalé.
